# EUROPÄISCHE PATENTSCHRIFT

(11) **EP 3 638 453 B1**
(45) Veröffentlichungstag und Bekanntmachung des Hinweises auf die Patenterteilung: **13.04.2022**
(21) Anmeldenummer: 18731403.4
(22) Anmeldetag: 12.06.2018
(51) Int. Cl.: B23Q 3/06, B25B 1/14, B25B 1/18, B25B 1/24, B25B 5/02, B25B 5/06, B25B 5/12, B25B 5/16, B23Q 1/00, B23Q 3/10

(54) **VERFAHREN, VORRICHTUNG UND HILFSELEMENT ZUR HALTERUNG EINES WERKSTÜCKS**
METHOD, DEVICE, AND AID ELEMENT FOR MOUNTING A WORKPIECE
PROCÉDÉ, DISPOSITIF ET ÉLÉMENT AUXILIAIRE POUR LA RETENUE D'UNE PIÈCE

(30) Priorität: 12.07.2017 DE 102017115696
(43) Veröffentlichungstag der Anmeldung: 22.04.2020
(73) Patentinhaber: Gressel AG, 8355 Aadorf (CH)
(72) Erfinder: SCHLÜSSEL, Marcel, 8303 Bassersdorf (CH); RELEA, Eduard, 8708 Männedorf (CH); WEISS, Lukas, Pfäffikon 8330 (CH)
(74) Vertreter: Charrier Rapp & Liebau
(86) Internationale Anmeldenummer: PCT/EP2018/065436
(87) Internationale Veröffentlichungsnummer: WO 2019/011546

(56) Entgegenhaltungen:
- DE-A1-102013 218 050
- KR-A- 20140 055 091
- US-A1- 2009 206 225

## Beschreibung

Die Erfindung betrifft ein Verfahren zur Halterung eines Werkstücks. Die Erfindung betrifft außerdem eine Vorrichtung zur Ausführung des Verfahrens.

Kubische Werkstücke oder Werkstücke mit geraden Flächen werden z.B. zur Bearbeitung in spanenden Werkzeugmaschinen üblicherweise durch reibschlüssiges Spannen in einem Schraubstock gespannt. Auch runde oder profilierte Teile werden reibschlüssig mit Spannzangen oder Spannfuttern gespannt. Besonders bei großen oder sperrigen Teilen erfolgt das Spannen durch sogenannte Spannpratzen, mit denen das zu bearbeitende Werkstück gegen einen Arbeitstisch oder eine Unterlage gespannt wird. Auch hier wird das Spannen durch einen Reibschluss sowohl durch den Kontakt mit der Unterlage als auch durch den Kontakt mit den Spannpratzen bewirkt. Bei jeder Art von reibschlüssigem Spannen besteht jedoch das Problem, dass zur Erreichung einer rechtwinklig zur Spannrichtung wirkenden Haltekraft aufgrund der üblichen Reibungskoeffizienten deutlich höhere Spannkräfte erforderlich sind. Durch diese hohen Spannkräfte werden die Werkstücke jedoch oftmals elastisch und/oder plastisch verformt, was zu Bearbeitungsungenauigkeiten führen kann. Außerdem muss das Spannmittel (Schraubstock, Futter, Spannzange) für entsprechend hohe Kräfte ausgelegt werden, was den Fertigungsaufwand und die Kosten erhöht. Diese Nachteile können dadurch verringert werden, dass das Werkstück durch eine raue und/oder strukturierte Oberfläche der Spannmittel lokal verformt wird und somit zumindest teilweise ein Formschluss entsteht. Dadurch kann zwar das Verhältnis von verfügbarer Festigkeit zu aufgebrachter Spannkraft verbessert werden, allerdings bleibt die benötigte Spannkraft immer noch deutlich höher als die verfügbare Festigkeit. Zudem hängt die erzielte Verbesserung stark von der Härte des Werkstücks ab.

Ein weiteres Problem des direkten Spannens am Werkstück besteht darin, dass durch die üblicherweise verwendeten Spannbacken oder Zangenelemente ein Teil des Werkstücks abgedeckt und dadurch die Zugänglichkeit zum Werkstück für dessen Bearbeitung beeinträchtigt wird. Diese Problematik kann dadurch umgangen werden, dass an dem Werkstück eine nur zum Spannen verwendete Materialzugabe vorgesehen wird. Dadurch werden aber die Material- und Bearbeitungskosten erhöht. Außerdem wird auch hier das Werkstück zumindest in dem Spannbereich in der Regel verformt.

Aus der KR 2014 0055091 A ist eine Spannvorrichtung mit mehreren sternförmig angeordneten, radial verstellbaren Spannbacken bekannt. Die Spannbacken sind in mehreren in Umfangsrichtung gleichwinklig beabstandeten Aufnahmenuten eines Aufnahmefutters verschiebbar angeordnet und weisen an ihren inneren Stirnseiten eine Profilierung zum Spannen zylindrischer Werkstücke auf.

Die US 2009/0206225 A1 betrifft eine Werkzeugmaschine mit einer Anordnung zum Wechseln von Paletten. Zur genauen Positionierung einer Palette sind an einem Maschinentisch diverse Zentrierelemente zur Verbindung mit entsprechenden Aufnahmeöffnungen an einer Palette vorgesehen.

In der DE 10 2013 218 050 A1 ist eine Spannvorrichtung zum Einspannen mindestens eines Spannnippels einer Werkstückpalette oder eines Werkstücks offenbart.

Aufgabe der Erfindung ist es, ein Verfahren zum Halterung eines Werkstücks und eine Vorrichtung zur Ausübung des Verfahrens zu schaffen, die unabhängig von der Form und Kontur des Werkstücks eine sichere Halterung des Werkstücks ermöglichen.

Diese Aufgabe wird durch ein Verfahren mit den Merkmalen des Anspruch 1 und durch eine Vorrichtung mit den Merkmalen des Anspruchs 8 gelöst. Zweckmäßige Weiterbildungen und vorteilhafte Ausgestaltungen der Erfindung sind in den Unteransprüchen angegeben.

Bei dem erfindungsgemäßen Verfahren werden an dem zu bearbeitenden Werkstück mehrere voneinander beabstandete Hilfselemente angebracht an denen das Werkstück z.B. während der Bearbeitung durch formschlüssiges Spannen der Hilfselemente gehalten wird. Das Werkstück wird dann durch plastische Verformung der Hilfselemente mittels mehrerer voneinander beabstandeter Spannbacken einer Spannvorrichtung gehalten. Die Spannkraft wird also nicht direkt in das Werkstück, sondern in die speziell dafür vorgesehenen und als Verbrauchsteil einfach zu fertigenden Hilfselemente eingeleitet. Der Kraft- und Formschluss erfolgt innerhalb der Hilfselemente, so dass das eigentliche Werkstück möglicht wenig beeinträchtigt wird. Die Hilfselemente können ohne Auswirkungen auf das eigentliche Werkstück auch z.B. durch Eindrücken eines Spannprofils verformt werden, wodurch eine sichere und positionsgenaue Halterung gewährleistet ist. Durch die Verformung der Hilfselemente und den dadurch bewirkten Formschluss wird das Verhältnis von verfügbarer Festigkeit zu Spannkraft relevant verbessert. Da die Hilfselemente üblicherweise auch nur an einer Seite des Werkstücks angebracht werden, können die übrigen Seiten des Werkstücks ohne Einschränkungen bearbeitet werden, so dass die Zugänglichkeit für die Bearbeitung gegenüber der konventionellen Spannung erheblich verbessert wird. Aufgrund des Spannens der Hilfselemente können die Werkstücke auch völlig unterschiedliche Formen und Konturen aufweisen. Durch die Hilfselemente kann auch unabhängig vom Werkstück eine definierte Schnittstelle mit reproduzierbaren Spannbedingungen geschaffen werden.

In besonders zweckmäßiger Weise wird das Werkstück dadurch gehalten, dass an gegenüberliegenden Seiten der Hilfselemente ein Spannprofil eingedrückt wird. Durch das z.B. an Spannbacken angeordnete Spannprofil wird an den Hilfselementen ein entsprechendes Eindrückprofil erzeugt. Dadurch ist ein guter Formschluss erreichbar. Das Spannprofil kann in Form von einem oder mehreren zueinander parallelen keilförmigen Eindrückstegen an Spannbacken ausgebildet sein. Dadurch werden die Hilfselemente nicht mit einer Fläche, sondern mit einer Linie quer zur Längsachse der Hilfselemente gespannt. Somit entsteht im Kontaktbereich eine hohe Punktlast, welche schon bei geringen Kräften zur Bildung eines kerbförmigen Eindrückprofils an den Hilfselementen führt. Das kerbförmige Eindrückprofil wächst so lange, bis die Kontaktfläche genügend groß ist, dass die Flächenpressung keine weitere Materialverformung mehr bewirken kann. Das Spannprofil kann aber auch eine andere Form aufweisen.

Die Hilfselemente sind in einer bevorzugten Ausführung in einem vorgegebenen Raster an dem Werkstück angeordnet. Unabhängig von der Form und Kontur des Werkstücks kann so eine definierte Schnittstelle geschaffen werden, durch die nicht nur das Spannen, sondern auch der Transport und die Lagerung der Werkstücke vereinfacht werden kann. Zweckmäßigerweise können die Hilfselemente an dem Werkstück angeschweißt, angelötet, an diesem angeklebt, angeformt oder auf andere Weise fest an dem Werkstück angeordnet sein.

Die Hilfselemente können nach der Bearbeitung des Werkstücks von diesem entfernt werden. Sie können aber auch noch zunächst an dem Werkstück verbleiben und z.B. zum Transport oder zur Lagerung der Werkstücke verwendet werden.

Eine erfindungsgemäße Vorrichtung zur Ausübung des vorstehend beschriebenen Verfahrens zeichnet sich durch mehrere in Umfangsrichtung voneinander beabstandete Spannbacken aus, die zwischen einander zugewandten Seitenflächen durch Verschiebung der Spannbacken in der Breite veränderbare Klemmspalte zur Aufnahme und zum formschlüssigen Spannen mehrerer in einem vorgegeben Raster an dem Werkstück angeordneter Hilfselemente durch plastische Verformung der Hilfselemente begrenzen.

In einer vorteilhaften Ausgestaltung können die Spannbacken jeweils zwei unter einem Winkel zueinander angeordnete Seitenflächen zur Bildung mehrerer Klemmspalte enthalten. Zweckmäßigerweise weisen die Spannbacken an den einander zugewandten Seitenflächen ein Spannprofil zum Eindrücken in die Hilfselemente auf. Die Spannbacken sind bevorzugt so angeordnet, dass die zwischen den Spannbacken gebildeten Klemmspalte in einer Draufsicht sternförmig angeordnet sind.

In einer zweckmäßigen Ausführung können die Spannbacken auf mehreren innerhalb eines Futterkörpers in Umfangsrichtung beabstandet angeordneten und durch einen Antrieb verschiebbaren Spannbackenträgern angeordnet sein.

Der Antrieb zur Verstellung der Spannbackenträger kann in einer vorteilhaften Ausführung als Kniehebelantrieb mit einem innerhalb des Futterkörpers verschiebbaren Kolben und mehreren zwischen dem Kolben und den Spannbackenträgern angeordneten Übertragungselementen ausgeführt sein. Dadurch ist eine hohe gute Kraftübersetzung erreichbar. Die Übertragungselemente können zwei über ein Zwischenstück miteinander verbundene kalottenförmige Anschlussstücke mit stiftförmigen Verbindungsteilen enthalten. Der Antrieb kann aber auch als Keilantrieb ausgebildet sein. In einer zweckmäßigen Ausführung kann der Keilantrieb einen innerhalb eines Zylinders verschiebbaren Kolben und mehrere zwischen einer geneigten Innenfläche und einer geneigten Außenfläche angeordnete Wälzkörper enthalten oder wie bei konventionellen Spannfuttern als Zahnstangenantrieb ausgeführt sein. Auch andere Antriebe zur Verstellung der Spannbackenträger sind möglich.

In dem Futterkörper kann zweckmäßigerweise ein Ausstoßer zum Anheben des Werkstücks aus einer Spann- in eine Entnahmeposition angeordnet sein.

Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein Werkstück mit mehreren Hilfselementen zum Spannen und Handhaben des Werkstücks in einer Perspektive;
- **Figur 2**: das Werkstück von Figur 1 mit den Hilfselementen in einer Unteransicht;
- **Figur 3**: ein erstes Ausführungsbeispiel eines Hilfselements vor dem Spannen in einer Perspektive und einer Seitenansicht;
- **Figur 4**: das Hilfselement von Figur 3 nach dem Spannen in einer Perspektive und einer Seitenansicht;
- **Figur 5**: ein zweites Ausführungsbeispiel eines Hilfselements vor dem Spannen in einer Perspektive und einer Seitenansicht;
- **Figur 6**: das Hilfselement von Figur 5 nach dem Spannen in einer Perspektive und einer Seitenansicht;
- **Figur 7**: ein erstes Ausführungsbeispiel einer Vorrichtung zur Halterung eines Werkstücks in einer Perspektive;
- **Figur 8**: ein erstes Ausführungsbeispiel einer Spannbacke in einer Draufsicht;
- **Figur 9**: die Spannbacke von Figur 8 in einer Seitenansicht;
- **Figur 10**: ein zweites Ausführungsbeispiel einer Spannbacke in einer Draufsicht;
- **Figur 11**: die Spannbacke von Figur 10 in einer Seitenansicht;
- **Figur 12**: ein zweites Ausführungsbeispiel einer Vorrichtung zur Halterung eines Werkstücks in einer Perspektive;
- **Figur 13**: die Vorrichtung von Figur 12 ohne Spannbacken in einer Perspektive;
- **Figur 14**: die Vorrichtung von Figur 12 in einer Schnittansicht;
- **Figur 15**: die Vorrichtung von Figur 12 in einer Explosionsdarstellung;
- **Figur 16**: die Vorrichtung von Figur 12 mit einem Werkstück und Greiferarmen einer Transporteinrichtung in einer Perspektive;
- **Figur 17**: die Vorrichtung von Figur 16 mit dem Werkstück und den Greiferarmen in einer Draufsicht;
- **Figur 18**: eine geschnittene Perspektive eines dritten Ausführungsbeispiels einer Vorrichtung zur Halterung eines Werkstücks in einer Spannstellung;
- **Figur 19**: eine geschnittene Perspektive des Ausführungsbeispiels von Figur 18 in einer Lösestellung;
- **Figur 20**: einen Querschnitt des Ausführungsbeispiels von Figur 18 in einer Spannstellung;
- **Figur 21**: einen Querschnitt des Ausführungsbeispiels von Figur 18 in einer Lösestellung;
- **Figur 22**: eine Vorrichtung zur Halterung eines Werkstücks mit einer alternativen Anordnung der Spannbacken; und eine Werkstückablage in einer Perspektive;
- **Figur 23**: eine weitere Vorrichtung zur Halterung eines Werkstücks mit einer alternativen Anordnung der Spannbacken. die Werkstückablage von Figur 22 in einer Draufsicht;
- **Figur 24**: eine Werkstückablage in einer Perspektive und
- **Figur 25**: die Werkstückablage von Figur 24 in einer Draufsicht.

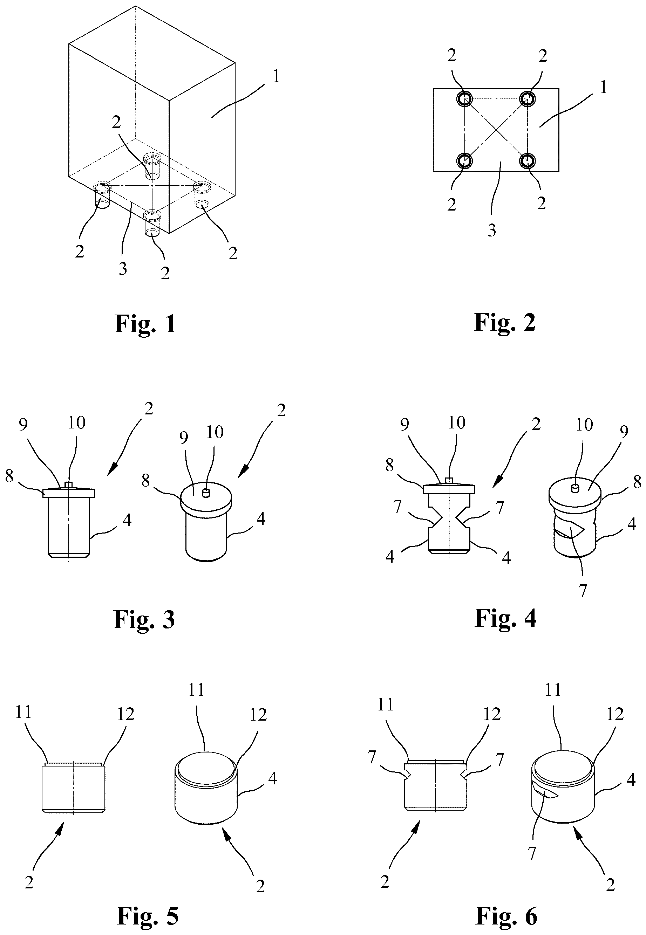

In den Figuren 1 und 2 ist schematisch ein Werkstück 1 mit mehreren voneinander beabstandeten Hilfselementen 2 zum formschlüssigen Spannen und Transportieren des Werkstücks gezeigt. Die hier in Form von Bolzen ausgebildeten Hilfselemente 2 können an dem Werkstück 1 angeschweißt, an diesem angeklebt, angelötet, angeschraubt, angeformt oder auf andere Weise fest mit dem Werkstück 1 verbunden sein. Die später wieder entfernbaren Hilfselemente 2 dienen als fixe Kontaktpunkte, über die das Werkstück 1 zur Bearbeitung formschlüssig gespannt und ggf. transportiert bzw. gelagert werden kann. In der gezeigten Ausführung sind an der Unterseite des Werkstücks 1 vier in einem vorgegeben Raster 3 angeordnete, nach unten vorstehende Hilfselemente 2 vorgesehen. Bei dem dargestellten Beispiel ist das Raster 3 ein Quadrat, an dessen Ecken die bolzenförmigen Hilfselemente 2 angeordnet sind.

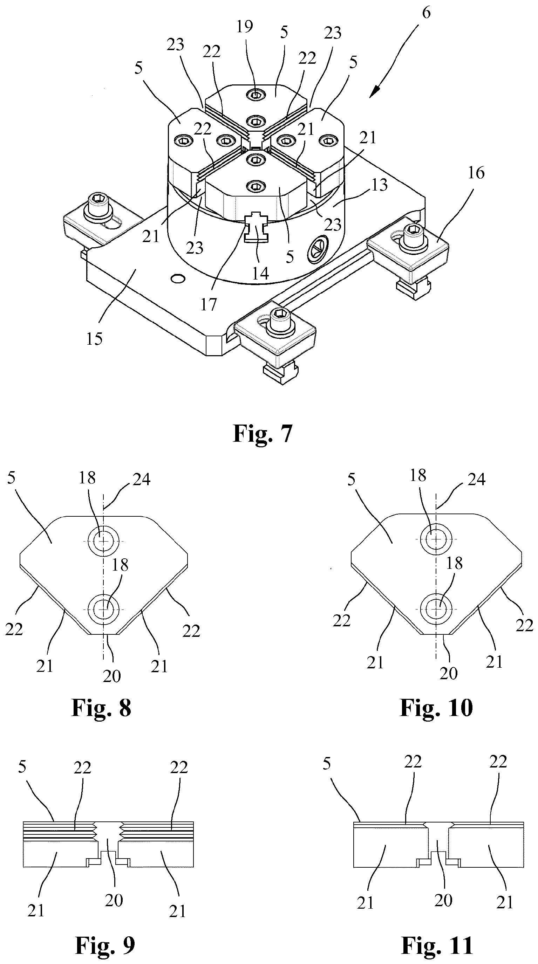

Die in den Figuren 3 bis 6 gesondert dargestellten bolzenförmigen Hilfselemente 2 sind aus einem verformbaren Material mit einer glatten Außenfläche 4 ausgeführt. Die bolzenförmigen Hilfselemente 2 sind an der Unterseite des Werkstücks 1 nach unten vorstehend derart angeordnet, dass diese von mehreren gegeneinander verschiebbaren Spannbacken 5 einer in Figur 7 gezeigten Spannvorrichtung 6 durch Eindrücken eines in den Figuren 4 und 6 gezeigten Eindrückprofils 7 an zwei gegenüberliegenden Seiten formschlüssig gespannt werden können.

In den Figuren 3 und 4 ist ein zum Anschweißen an ein Werkstück 1 geeignetes bolzenförmiges Hilfselement 2 vor und nach dem Spannen gezeigt. Dieses weist neben der glatten Außenfläche 3 einen Ringbund 8 mit einer konischen Anlagefläche 9 und einer Spitze 10 auf. Bei der Befestigung des Hilfselements 2 mit einem Bolzenschweißverfahren kann der Lichtbogen an der Spitze 10 zünden und die Anlagefläche 9 zur Befestigung am Werkstück 1 aufschmelzen. Durch Eindrücken eines entsprechenden Eindrückprofils 7 an der Außenfläche 4 kann das bolzenförmige Hilfselement 2 zur Halterung des Werkstücks 1 formschlüssig gespannt werden.

Das in den Figuren 5 und 6 gezeigte Hilfselement 2 ist zum Ankleben an dem Werkstück 1 bestimmt. Es weist neben einer glatten Außenfläche 4 einen Ringabsatz 11 mit einer Ringfläche 12 zum Einstecken in eine entsprechende Bohrung an der Unterseite des Werkstücks 1 auf. Über den Ringabsatz 11 mit der Ringfläche 12 kann das bolzenförmige Hilfselement 2 in das Werkstück 1 eingesteckt und mit diesem verklebt werden. Auch hier kann das Hilfselement 2 durch Einprägen eines entsprechenden Eindrückprofils 7 an der Außenseite 4 zur Halterung des Werkstücks 1 formschlüssig gespannt werden.

Die in Figur 7 gezeigte Vorrichtung 6 zur Halterung eines in den Figuren 1 und 2 schematisch dargestellten Werkstücks 1 ist in Art eines Spannfutters mit einem zylindrischen Futterkörper 13 und mehreren in dem Futterkörpers 13 radial verschiebbaren Spannbackenträgern 14 ausgeführt. In dem gezeigten Ausführungsbeispiel kann der Futterkörper 13 über eine Grundplatte 15 und Spannpratzen 16 in an sich bekannter Weise auf einem Maschinentisch einer Bearbeitungsmaschine befestigt werden. Der Futterkörper 13 weist bei der gezeigten Ausführung an seiner Oberseite vier radial verlaufende und in Umfangsrichtung des Futterkörpers 13 um jeweils 90° zueinander versetzte Nuten 17 auf, in denen jeweils ein Spannbackenträger 14 radial verschiebbar geführt ist. Die schienenförmigen Spannbackenträger 14 sind über einen in dem Futterkörper 13 untergebrachten Antrieb gleichzeitig radial nach innen oder außen verschiebbar.

Auf den Spannbackenträgern 14 sind in den Figuren 8 bis 11 gezeigte Spannbacken 5 über Bohrungen 18 und in Figur 7 gezeigte Schrauben 19 befestigt. Die Spannbacken 5 weisen eine zur Mitte des Futterkörpers 13 weisende Spitze 20 und zwei unter einem Winkel zueinander angeordnete Seitenflächen 21 mit einem Spannprofil 22 zum formschlüssigen Spannen der Hilfselemente 2 auf. Bei der Ausführung der Figuren 8 und 9 sind an den Seitenflächen 21 mehrere zueinander parallele keilförmige Eindrückstege als Spannprofil 22 vorgesehen. Als Spannprofil 22 kann aber auch nur ein keilförmiger Eindrücksteg vorhanden sein, wie dies in den Figuren 10 und 11 gezeigt ist. Auch andere in die Hilfselemente 2 eindrückbaren Spannprofile zur formschlüssigen Klemmung sind möglich. Die Spannbacken 5 sind derart ausgestaltet und so auf den Spannbackenträgern 14 montiert, dass zwischen den einander zugewandten Seitenflächen 21 ein zur Aufnahme der bolzenförmigen Hilfselemente 2 dienender Klemmspalt 23 gebildet ist, dessen Breite durch Radialbewegung der Spannbackenträger 14 vergrößert oder verkleinert werden kann.

Bei der gezeigten Ausführungsform weisen die für eine Vorrichtung 6 in Art eines Vierbackenfutters bestimmten Spannbacken 5 im Wesentlichen die Form eines gleichseitigen Dreiecks mit zwei unter einem Winkel von 90° zueinander angeordneten Seitenflächen 21 auf. Die beiden Seitenflächen 21 sind jeweils um einen Winkel von 45° gegenüber einer Mittelachse 24 der Spannbacken 5 geneigt und die Spannbacken 5 sind so auf den Spannbackenträgern 14 montiert, dass die Mittelachse 24 der Spannbacken 5 mit der Längsachse der schienenförmigen Spannbackenträger 14 zusammenfällt. Durch eine radiale Verschiebung der Spannbackenträger 14 nach innen, werden die Spannbacken 5 zusammengefahren, wodurch die Breite der Klemmspalte 23 zwischen den Spannbacken 5 verringert wird und sich die Spannprofile 22 an den Seitenflächen 21 der Spannbacken von zwei gegenüberliegenden Seiten in die Hilfselemente 2 eindrücken und diese zur sicheren Halterung des Werkstücks 1 formschlüssig klemmen.

Zur Halterung eines Werkstücks 1 mit drei voneinander beabstandeten bolzenförmigen Hilfselementen 2 kann die Spannvorrichtung 6 aber auch in Art eines Dreibackenfutters mit drei in Umfangsrichtung des Futterkörpers um jeweils 120° versetzten Spannbackenträgern und drei gegeneinander verfahrbaren Spannbacken ausgeführt sein. Dann können die Spannbacken als Kreissegmente mit einem Winkel von 120° zwischen den beiden Seitenflächen ausgeführt sein. Auch andere Winkelaufteilungen sind möglich.

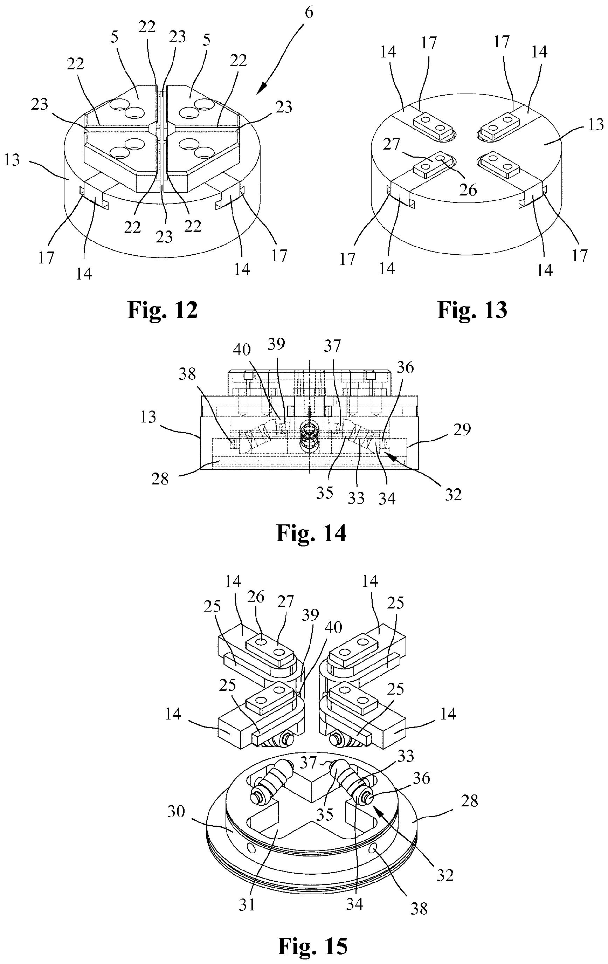

In Figur 12 ist ein weiteres Ausführungsbeispiel einer Vorrichtung 6 zur Halterung eines in den Figuren 1 und 2 schematisch dargestellten Werkstücks 1 gezeigt. Auch diese Vorrichtung 6 ist in Art eines Spannfutters mit einem zylindrischen Futterkörper 13 und mehreren in dem Futterkörpers 13 radial verschiebbaren Spannbackenträgern 14 mit darauf befestigten Spannbacken 5 ausgebildet.

Wie aus Figur 13 hervorgeht, weist der Futterkörper 13 auch bei dieser Ausführung an seiner Oberseite vier radial verlaufende und in Umfangsrichtung des Futterkörpers 13 um jeweils 90° zueinander versetzte Nuten 17 mit einem T-förmigen Querschnitt auf. In den Nuten 17 ist jeweils ein Spannbackenträger 14 radial verschiebbar geführt. In Figur 15 ist erkennbar, dass die schienenförmigen Spannbackenträger 14 an ihren Seitenflächen vorstehende Führungsstege 25 zur Führung innerhalb der Nut 17 und an ihrer Oberseite einen mit Bohrungen 26 versehenen, quaderförmigen Ansatz 27 zur Befestigung der Spannbacken 5 enthalten.

In den Figuren 14 und 15 ist ein Antrieb zur Verstellung der Spannbackenträger 14 gezeigt. Der Antrieb umfasst einen Kolben 28, der innerhalb einer Zylinderbohrung 29 der Futterkörpers 13 axial verschiebbar geführt ist. Wie aus Figur 15 hervorgeht, enthält der Kolben 28 einen zylindrischen Ansatz 30 mit einer kreuzförmigen Aussparung 31, in der vier hier als Kniehebel ausgebildete Übertragungselemente 32 zur Verbindung zwischen dem Kolben 28 und den Spannbackenträgern 14 untergebracht sind. Die Übertragungselemente 32 weisen zwei über ein buchsenförmiges Zwischenstück 33 voneinander beabstandete, kalottenförmige Anschlussstücke 34 und 35 mit jeweils einem stiftförmigen Verbindungsteil 36 und 37 auf. Die Übertragungselemente 32 sind an der einen Seite über das stiftförmige Verbindungsteil 36 in eine Bohrung 38 am zylindrischen Ansatz 30 des Kolbens 28 und an der anderen Seite in eine Bohrung 39 an einem Steg 40 der Spannbackenträger 14 eingesetzt. Wird der Kolben 28 nach oben bewegt, werden die Spannbackenträger 14 über die als Kniehebel ausgebildete Übertragungselemente 32 radial nach innen verfahren, so dass sich die an den Seitenflächen 21 der Spannbacken 5 vorgesehenen Spannprofile 22 an zwei gegenüberliegenden Seiten des bolzenförmigen Hilfselements 2 eindrücken und dadurch die Hilfselemente 2 formschlüssig klemmen.

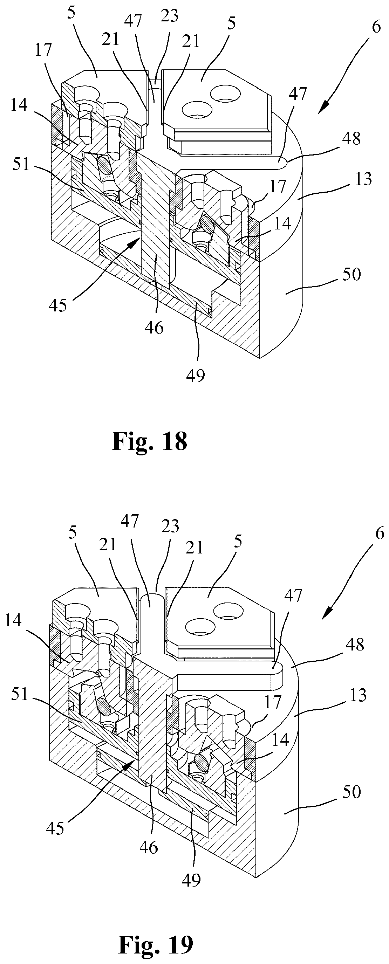

Die Figuren 18 bis 22 zeigen ein weiteres Ausführungsbeispiel einer Vorrichtung 6 zur Halterung eines Werkstücks 1. Auch diese Vorrichtung 6 enthält einen zylindrischen Futterkörper 13 und mehrere in dem Futterkörpers 13 radial verschiebbare Spannbackenträger 14. Der Futterkörper 13 enthält bei der gezeigten Ausführung vier radial verlaufende und in Umfangsrichtung des Futterkörpers 13 um jeweils 90° zueinander versetzte Nuten 17, in denen jeweils ein Spannbackenträger 14 radial verschiebbar geführt ist. Die Spannbackenträger 14 mit darauf befestigten Spannbacken 5 sind über einen im Folgenden näher erläuterten Antrieb gleichzeitig radial nach innen oder außen verschiebbar.

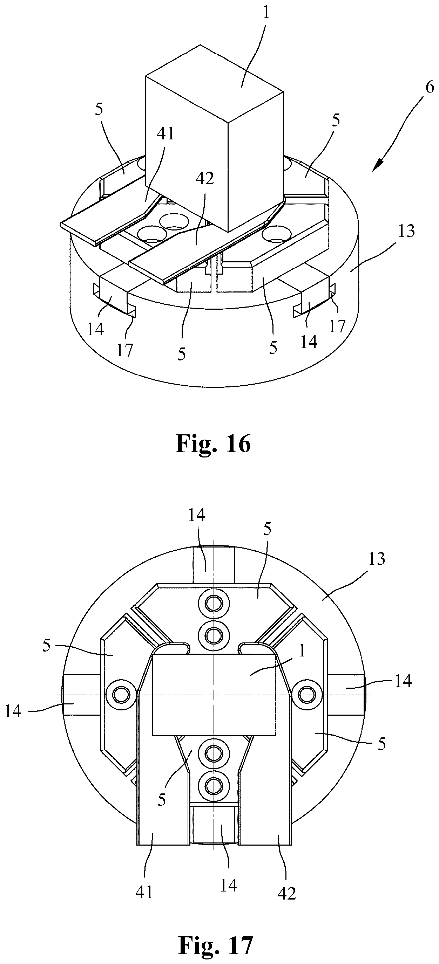

Bei der gezeigten Ausführung ist in dem Futterkörper 13 außerdem ein axial verstellbarer Ausstoßer 45 zum Anheben der Werkstücks 1 aus einer Spann- in eine Entnahmeposition angeordnet. Der Ausstoßer 45 enthält vier am oberen Ende eines Stößels 46 kreuz- oder sternförmig angeordnete Arme 47, die in den vier zwischen den Seitenflächen 21 der Spannbacken 5 gebildeten Klemmspalten 23 angeordnet und durch axiale Verschiebung des Stößels 46 zwischen einer in Figur 18 gezeigten eingefahrenen Stellung und einer in Figur 19 dargestellten ausgefahrenen Stellung bewegbar sind. In der eingefahrenen Stellung sind die Arme in entsprechende Vertiefungen 48 des Futterkörpers 13 eingezogen. In der ausgefahrenen Stellung von Figur 19 stehen die Arme 47 gegenüber der Oberseite des Futterkörpers 13 vor, so dass das Werkstück 1 über die bolzenförmigen Hilfselemente 2 angehoben wird. Dadurch kann z.B. auch ein entsprechender Greifer mit den in Figur 16 und 17 gezeigten Greiferarmen unter das Werkstück 1 gelangen.

Der Antrieb des über den zentralen Stößel 46 innerhalb der Futterkörpers 13 axial verschiebbar geführten Ausstoßers 45 erfolgt über einen am unteren Ende des Stößels 46 angeordneten Kolben 49, der in einem unterhalb des Futterkörpers 13 angeordneten Zylinders 50 verschiebbar geführt und über Hydraulikfluid oder ein anderes Druckmedium in zwei Richtungen axial bewegbar ist. In dem Zylinder 50 ist oberhalb des Kolbens 49 ein um den Stößel 46 angeordneter Ringkolben 51 als Teil eines Antriebs zur radialen Bewegung der Spannbackenträger 14 untergebracht.

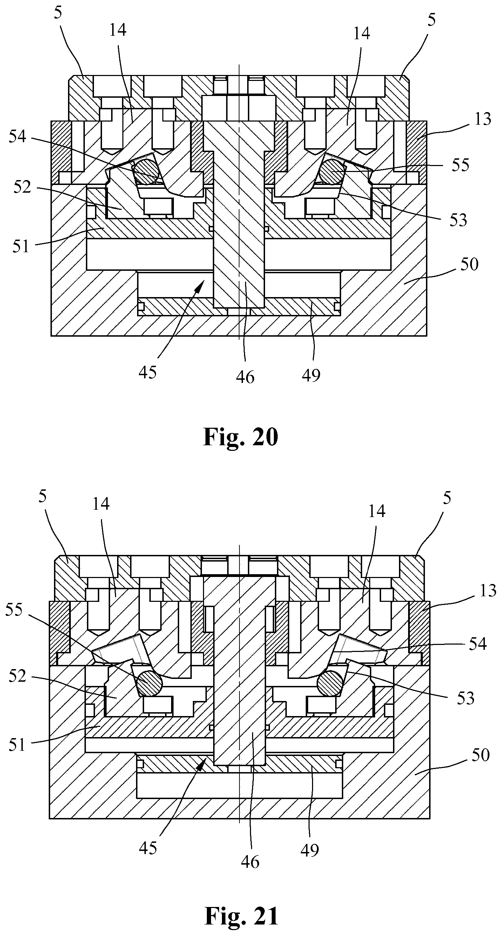

Wie aus Figur 20 hervorgeht, ist auf der Oberseite des Ringkolbens 51 ein ringförmiges Druckstück 52 mit einer geneigten Innenfläche 53 angeordnet. Die innerhalb des Futterkörpers 13 radial verschiebbaren Spannbackenträger 14 weisen an ihrer Unterseite einen Ansatz mit einer entsprechend der Innenfläche 53 geneigten Außenfläche 54 auf. Zwischen der geneigten Innenfläche 53 am Druckstück 52 und den geneigten Außenflächen 54 an den Spannbackenträgern 14 sind Wälzkörper 55 angeordnet. Bei der gezeigten Ausführung sind die Außenflächen 54 an den Spannbackenträgern 14 nicht kontinuierlich geneigt, sondern weisen im unteren Bereich einen flacheren und im oberen Bereich einen steileren Verlauf auf. Dadurch kann erreicht werden, dass die Spannbacken 5 beim Hochfahren des Ringkolbens 51 zunächst schneller und anschließend mit weniger Verfahrweg aber größerer Verstärkung zusammenfahren. Alternativ kann der Keilantrieb auch ohne Wälzkörper ausgeführt werden, wobei dann allerdings höhere Reibungsverluste entstehen.

In den Figuren 18 und 20 ist die Vorrichtung 6 in einer Spannstellung gezeigt. In dieser Stellung ist der Ringkolben 51 durch Druckbeaufschlagung der zwischen dem Kolben 49 und dem Ringkolben 51 angeordneten Druckkammer 56 nach oben gefahren, wodurch die Spannbackenträger 14 von dem Druckstück 51 über die Kugeln 55 radial nach innen gedrückt sind.

Wird dagegen der Ringkolben 51 gemäß der Figuren 19 und 21 nach unten gedrückt, können sich die z.B. durch Federn beaufschlagten Spannbackenträger 14 radial nach außen in eine Lösestellung bewegen. Durch Druckbeaufschlagung des Kolbens 49 an dessen Unterseite kann dann der Ausstoßer 45 in die ausgefahrene obere Stellung bewegt werden.

Die Spannbacken 5 sind auch hier derart ausgestaltet und so auf den Spannbackenträgern 14 montiert, dass zwischen den beiden Seitenflächen 21 jeweils einer Spannbacke 5 ein zur Aufnahme der bolzenförmigen Hilfselemente 2 dienender Klemmspalt 23 gebildet ist, dessen Breite durch Radialbewegung der Spannbackenträger 14 vergrößert oder verkleinert werden kann.

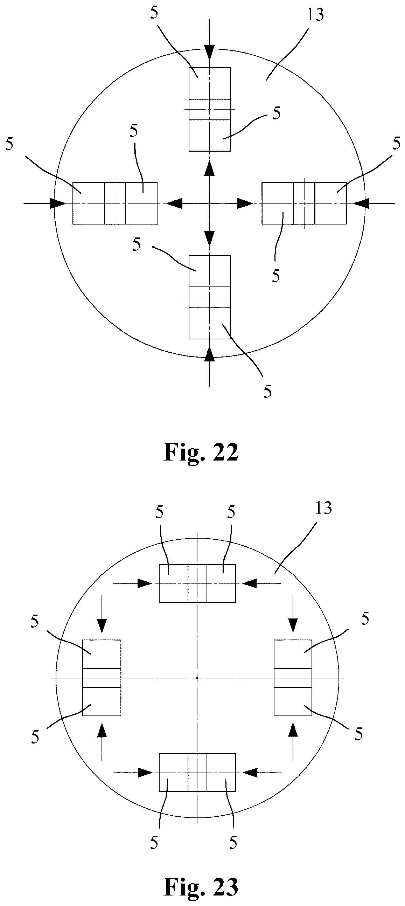

In den beiden Figuren 22 und 23 sind alternative Ausführungen zur Anordnung der Spannbacken 5 gezeigt. Auch bei diesen Ausführungen sind auf einem Futterkörper 13 oder einem anderen Träger mehrere in Umfangsrichtung gleichwinklig beabststandete Spannbacken 5 angeordnet. Bei der Ausführung von Figur 22 sind die um jeweils 90° in Umfangsrichtung versetzt angeordneten Spannbacken 5 radial verschiebbar, während die Spannbacken 5 bei der Ausführung von Figur 23 tangential verschiebbar sind. Auch mit einer derartigen Anordnung der Spannbacken 5 kann ein in Figur 1 gezeigtes Werkstück 1 über die bolzenförmigen Hilfselemente 2 gespannt werden.

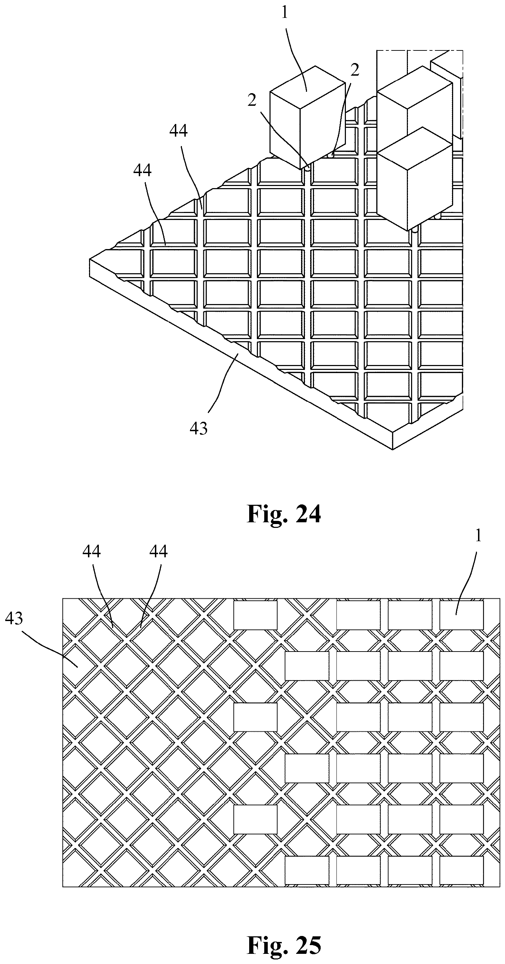

Die an dem Werkstück 1 angeordneten Hilfselemente 2 können nicht nur zum Spannen des Werkstücks 1 während der Bearbeitung, sondern auch zur Handhabung bzw. zum Transport des Werkstücks 1 eingesetzt werden. So kann z.B. das Werkstück 1 an den Hilfselementen 2 durch zwei in den Figuren 16 und 17 dargestellte Greifer 41 und 42 einer nicht näher gezeigten Transporteinrichtung gegriffen und z.B. zu einer in den Figuren 24 und 25 gezeigten Werkstückablage 43 transportiert werden. Die beiden Greifer 41 und 42 können derart ausgestaltet sein, dass sie an den beim Spannen erzeugten Eindrückprofilen 7 der Hilfselemente 2 angreifen, wodurch eine sichere Halterung der Werkstücke 1 gewährleistet ist. Um einen solchen Angriff zu ermöglichen, kann in der Vorrichtung 6 eine Hubeinrichtung oder vorstehend beschriebener Ausstoßer 45 integriert sein, durch den das Werkstück 1 aus der Spannposition angehoben wird, so dass die durch die Spannbacken 5 beim Spannen eingeprägten Eindrückprofile 7 von der Seite zugänglich sind.

Die in den Figuren 24 und 25 gezeigte Werkstückablage 43 weist eine an die Anordnung bzw. das Raster 3 der Hilfselemente 2 am Werkstück 1 angepasste Rasterung auf. Bei der gezeigten Ausführung sind in der Werkstückauflage 43 sich unter 90° kreuzende Aufnahmenuten 44 vorgesehen. Die Aufnahmenuten 44 weisen eine an den Durchmesser der bolzenförmigen Hilfselemente 2 angepasste Breite auf. Dadurch können die Werkstücke 1 mit den vier an den Ecken eines Quadrats angeordneten Hilfselementen 2 in diese Aufnahmenuten 44 eingesetzt werden.

### Bezugszeichenliste

- 1: Werkstück
- 2: Hilfselement
- 3: Raster
- 4: Außenfläche
- 5: Spannbacke
- 6: Vorrichtung
- 7: Eindrückprofil
- 8: Ringbund
- 9: Konische Anlagefläche
- 10: Spitze
- 11: Ringabsatz
- 12: Ringfläche
- 13: Futterkörper
- 14: Spannbackenträger
- 15: Grundplatte
- 16: Spannpratze
- 17: Nuten
- 18: Bohrung
- 19: Schraube
- 20: Spitze
- 21: Seitenfläche
- 22: Spannprofil
- 23: Klemmspalt
- 24: Mittelachse der Spannbacke
- 25: Führungssteg
- 26: Bohrung
- 27: Ansatz
- 28: Kolben
- 29: Zylinderbohrung
- 30: Ansatz
- 31: Aussparung
- 32: Übertragungselement
- 33: Zwischenstück
- 34: Anschlussstück
- 35: Anschlussstück
- 36: Verbindungsteil
- 37: Verbindungsteil
- 38: Bohrung
- 39: Bohrung
- 40: Steg
- 41: Greiferarm
- 42: Greiferarm
- 43: Werkstückauflage
- 44: Aufnahmenut
- 45: Ausstoßer
- 46: Stößel
- 47: Arm
- 48: Vertiefung
- 49: Kolben
- 50: Zylinder
- 51: Ringkolben
- 52: Druckstück
- 53: Innenfläche
- 54: Außenfläche
- 55: Wälzkörper
- 56: Druckraum

## Patentansprüche

1. Verfahren zum Halterung eines Werkstücks (1), **dadurch gekennzeichnet, dass** an dem Werkstück (1) mehrere voneinander beabstandete Hilfselemente (2) unlösbar angebracht werden und dass die Hilfselemente (2) durch plastische Verformung mittels mehrerer voneinander beabstandeter Spannbacken (5) einer Spannvorrichtung (6) formschlüssig gespannt werden.

2. Verfahren nach Anspruch 1, **dadurch gekennzeichnet, dass** das Werkstück (1) durch Eindrücken eines Spannprofils (22) an gegenüberliegenden Seiten der Hilfselemente (2) gehalten wird.

3. Verfahren nach Anspruch 2, **dadurch gekennzeichnet, dass** durch das Spannprofil (22) ein entsprechendes Eindrückprofil (7) an dem Hilfselement (2) erzeugt wird.

4. Verfahren nach einem der Ansprüche 1 bis 3, **dadurch gekennzeichnet, dass** die Hilfselemente (2) in einem vorgegebenen Raster (3) an dem Werkstück (1) angebracht werden.

5. Verfahren nach einem der Ansprüche 1 bis 4, **dadurch gekennzeichnet, dass** die Hilfselemente (2) an dem Werkstück (1) angeschweißt, angelötet, an diesem angeklebt, angeschraubt oder angeformt werden.

6. Verfahren nach einem der Ansprüche 1 bis 5, **dadurch gekennzeichnet, dass** die Hilfselemente (2) nach der Bearbeitung von dem Werkstück (1) zerspanend entfernt werden.

7. Verfahren nach einem der Ansprüche 1 bis 6, **dadurch gekennzeichnet, dass** die Hilfselemente (2) zum Transport und zur Lagerung der Werkstücke (1) verwendet werden.

8. Vorrichtung (6) zur Durchführung des Verfahrens nach einem der Ansprüche 1 bis 7, wobei die Vorrichtung mehrere in Umfangsrichtung voneinander beabstandete Spannbacken (5) enthält, **dadurch gekennzeichnet, dass** die Spannbacken (5) zwischen einander zugewandten Seitenflächen (21) durch Verschiebung der Spannbacken (5) in der Breite veränderbare Klemmspalte (23) zur Aufnahme und zum formschlüssigen Spannen mehrerer in einem vorgegebenen Raster an dem Werkstück (1) angeordneter Hilfselemente (2) durch plastische Verformung der Hilfselemente (2) begrenzen.

9. Vorrichtung (6) nach Anspruch 8, **dadurch gekennzeichnet, dass** die Spannbacken (5) jeweils zwei unter einem Winkel zueinander angeordnete Seitenflächen (21) zur Bildung mehrerer Klemmspalte (23) enthalten.

10. Vorrichtung (6) nach Anspruch 8 oder 9, **dadurch gekennzeichnet, dass** die Spannbacken (5) an den einander zugewandten Seitenflächen (21) ein Spannprofil (22) zum Eindrücken in die Hilfselemente (2) aufweisen.

11. Vorrichtung (6) nach einem der Ansprüche 8 bis 10, **dadurch gekennzeichnet, dass** die zwischen den Spannbacken (5) gebildeten Klemmspalte (23) in einer Draufsicht sternförmig angeordnet sind.

12. Vorrichtung (6) nach einem der Ansprüche 8 bis 11, **dadurch gekennzeichnet, dass** die Spannbacken (5) auf mehreren innerhalb eines Futterkörpers (13) in Umfangsrichtung beabstandet angeordneten und durch einen Antrieb (28, 32; 49, 55) verschiebbaren Spannbackenträgern (14) angeordnet sind.

13. Vorrichtung (6) nach Anspruch 12, **dadurch gekennzeichnet, dass** der Antrieb (28, 32) als Kniehebelantrieb mit einem innerhalb des Futterkörpers (13) verschiebbaren Kolben (28) und mehreren zwischen dem Kolben (28) und den Spannbackenträgern (14) angeordneten Übertragungselementen (32) ausgeführt ist.

14. Vorrichtung (6) nach Anspruch 13, **dadurch gekennzeichnet, dass** die Übertragungselemente (32) zwei über ein Zwischenstück (33) miteinander verbundene kalottenförmige Anschlussstücke (34, 35) mit stiftförmigen Verbindungsteilen (36, 37) enthalten.

15. Vorrichtung (6) nach Anspruch 12, **dadurch gekennzeichnet, dass** der Antrieb (28, 32) als Keilantrieb (49, 55) ausgebildet ist.

16. Vorrichtung (6) nach Anspruch 15, **dadurch gekennzeichnet, dass** der Keilantrieb einen innerhalb eines Zylinders (50) verschiebbaren Kolben (49) und mehrere zwischen einer geneigten Innenfläche (53) und einer geneigten Außenfläche (54) angeordnete Wälzkörper (55) umfasst.

17. Vorrichtung (6) nach Anspruch 16, **dadurch gekennzeichnet, dass** die geneigte Innenfläche (53) und/oder die geneigte Außenfläche (54) unterschiedliche Neigungen aufweisen.

18. Vorrichtung (6) nach einem der Ansprüche 12 bis 17, **dadurch gekennzeichnet, dass** in dem Futterkörper (13) ein Ausstoßer (45) zum Anheben des Werkstücks (1) aus einer Spann- in eine Entnahmeposition angeordnet ist.

## Claims

1. Method of holding a workpiece (1), **characterised in that** a plurality of spaced-apart auxiliary elements (2) are non-releasably attached to the workpiece (1) and **in that** the auxiliary elements (2) are positively clamped by plastic deformation by means of a plurality of spaced-apart clamping jaws (5) of a clamping device (6).

2. Method according to claim 1, **characterised in that** the workpiece (1) is held by pressing in a clamping profile (22) on opposite sides of the auxiliary elements (2).

3. Method according to claim 2, **characterised in that** the clamping profile (22) creates a corresponding indentation profile (7) on the auxiliary element (2).

4. Method according to one of the claims 1 to 3, **characterized in that** the auxiliary elements (2) are attached to the workpiece (1) in a predetermined grid (3).

5. Method according to one of the claims 1 to 4, **characterised in that** the auxiliary elements (2) are welded, soldered, glued, screwed or moulded onto the workpiece (1).

6. Method according to one of claims 1 to 5, **characterised in that** the auxiliary elements (2) are removed from the workpiece (1) by machining after processing.

7. Method according to any one of claims 1 to 6, **characterised in that** the auxiliary elements (2) are used for transporting and storing the workpieces (1).

8. Device (6) for carrying out the method according to one of claims 1 to 7, wherein the device contains a plurality of clamping jaws (5) spaced apart from one another in the circumferential direction, **characterised in that** the clamping jaws (5) define between mutually facing side surfaces (21) clamping gaps (23), which are variable in width by displacement of the clamping jaws (5), for receiving and for positively clamping a plurality of auxiliary elements (2) arranged in a predetermined grid on the workpiece (1) by plastic deformation of the auxiliary elements (2).

9. Device (6) according to claim 8, **characterised in that** the clamping jaws (5) each contain two side surfaces (21) arranged at an angle to one another to form a plurality of clamping gaps (23).

10. Device (6) according to claim 8 or 9, **characterised in that** the clamping jaws (5) have a clamping profile (22) on the mutually facing side surfaces (21) for pressing into the auxiliary elements (2).

11. Device (6) according to one of the claims 8 to 10, **characterised in that** the clamping gaps (23) formed between the clamping jaws (5) are arranged in a star shape in a plan view.

12. Device (6) according to one of the claims 8 to 11, **characterised in that** the clamping jaws (5) are arranged on a plurality of clamping jaw carriers (14) which are arranged spaced apart in the circumferential direction within a chuck body (13) and are displaceable by a drive (28, 32; 49, 55).

13. Device (6) according to claim 12, **characterised in that** the drive (28, 32) is designed as a toggle lever drive with a piston (28) displaceable within the chuck body (13) and several transmission elements (32) arranged between the piston (28) and the clamping jaw carriers (14).

14. Device (6) according to claim 13, **characterised in that** the transmission elements (32) comprise two dome-shaped junction pieces (34, 35) connected to one another via an intermediate piece (33) and having pin-shaped connecting parts (36, 37).

15. Device (6) according to claim 12, **characterized in that** the drive (28, 32) is designed as a wedge drive (49, 55).

16. Device (6) according to claim 15, **characterised in that** the wedge drive comprises a piston (49) displaceable within a cylinder (50) and a plurality of rolling elements (55) arranged between an inclined inner surface (53) and an inclined outer surface (54).

17. Device (6) according to claim 16, **characterized in that** the inclined inner surface (53) and/or the inclined outer surface (54) have different inclinations.

18. Device (6) according to any one of claims 12 to 17, **characterised in that** an ejector (45) for lifting the workpiece (1) from a clamping position into a removal position is arranged in the chuck body (13).

## Revendications

1. Procédé de retenue d'une pièce à usiner (1), **caractérisé en ce qu'**au niveau de la pièce à usiner (1) plusieurs éléments auxiliaires (2) espacés les uns des autres sont montés de manière indissociable et que les éléments auxiliaires (2) sont serrés à complémentarité de formes par déformation plastique au moyen de plusieurs mâchoires de serrage (5) espacées les unes des autres d'un dispositif de serrage (6).

2. Procédé selon la revendication 1, **caractérisé en ce que** la pièce à usiner (1) est maintenue par enfoncement d'un profil de serrage (22) au niveau de côtés opposés des éléments auxiliaires (2).

3. Procédé selon la revendication 2, **caractérisé en ce que** par le profil de serrage (22) un profil d'enfoncement (7) correspondant est généré au niveau de l'élément auxiliaire (2).

4. Procédé selon l'une quelconque des revendications 1 à 3, **caractérisé en ce que** les éléments auxiliaires (2) sont montés dans une trame (3) prédéfinie au niveau de la pièce à usiner (1).

5. Procédé selon l'une quelconque des revendications 1 à 4, **caractérisé en ce que** les éléments auxiliaires (2) sont soudés, brasés à la pièce à usiner (1), collés, vissés ou formés sur celle-ci.

6. Procédé selon l'une quelconque des revendications 1 à 5, **caractérisé en ce que** les éléments auxiliaires (2) sont retirés par enlèvement de copeaux après l'usinage de la pièce à usiner (1).

7. Procédé selon l'une quelconque des revendications 1 à 6, **caractérisé en ce que** les éléments auxiliaires (2) sont utilisés pour le transport et pour le stockage des pièces à usiner (1).

8. Dispositif (6) pour la réalisation du procédé selon l'une quelconque des revendications 1 à 7, dans lequel le dispositif contient plusieurs mâchoires de serrage (5) espacées les unes des autres dans le sens périphérique, **caractérisé en ce que** les mâchoires de serrage (5) délimitent entre des surfaces latérales (21) tournées l'une vers l'autre par déplacement des mâchoires de serrage (5) des fentes de serrage (23) modifiables dans la largeur pour la réception et pour le serrage à complémentarité de formes de plusieurs éléments auxiliaires (2) agencés dans une trame prédéfinie au niveau de la pièce à usiner (1) par déformation plastique des éléments auxiliaires (2).

9. Dispositif (6) selon la revendication 8, **caractérisé en ce que** les mâchoires de serrage (5) contiennent respectivement deux surfaces latérales (21) agencées selon un angle l'une à l'autre pour la formation de plusieurs fentes de serrage (23).

10. Dispositif (6) selon la revendication 8 ou 9, **caractérisé en ce que** les mâchoires de serrage (5) présentent au niveau des surfaces latérales (21) tournées l'une vers l'autre un profil de serrage (22) pour l'enfoncement dans les éléments auxiliaires (2).

11. Dispositif (6) selon l'une quelconque des revendications 8 à 10, **caractérisé en ce que** les fentes de serrage (23) formées entre les mâchoires de serrage (5) sont agencées dans une vue de dessus en forme d'étoile.

12. Dispositif (6) selon l'une quelconque des revendications 8 à 11, **caractérisé en ce que** les mâchoires de serrage (5) sont agencées sur plusieurs supports de mâchoire de serrage (14) agencés à distance dans un corps de mandrin (13) dans le sens périphérique et mobiles par un entraînement (28, 32 ; 49, 55).

13. Dispositif (6) selon la revendication 12, **caractérisé en ce que** l'entraînement (28, 32) est réalisé comme entraînement de levier à genouillère avec un piston (28) mobile dans le corps de mandrin (13) et plusieurs éléments de transmission (32) agencés entre le piston (28) et les supports de mâchoire de serrage (14).

14. Dispositif (6) selon la revendication 13, **caractérisé en ce que** les éléments de transmission (32) contiennent deux pièces de raccordement (34, 35) en forme de calotte reliées entre elles par le biais d'une pièce intermédiaire (33) avec des parties de liaison (36, 37) en forme de tige.

15. Dispositif (6) selon la revendication 12, **caractérisé en ce que** l'entraînement (28, 32) est réalisé comme entraînement à coin (49, 55).

16. Dispositif (6) selon la revendication 15, **caractérisé en ce que** l'entraînement à coin comporte un piston (49) mobile dans un cylindre (50) et plusieurs corps de roulement (55) agencés entre une surface intérieure (53) inclinée et une surface extérieure (54) inclinée.

17. Dispositif (6) selon la revendication 16, **caractérisé en ce que** la surface intérieure (53) inclinée et/ou la surface extérieure (54) inclinée présentent des inclinaisons différentes.

18. Dispositif (6) selon l'une quelconque des revendications 12 à 17, **caractérisé en ce que** dans le corps de mandrin (13) un éjecteur (45) est agencé pour le levage de la pièce à usiner (1) d'une position de serrage dans une position de retrait.
